# EUROPEAN PATENT SPECIFICATION

(11) **EP 3 244 659 B1**
(45) Date of publication and mention of the grant of the patent: **06.04.2022**
(21) Application number: 16735158.4
(22) Date of filing: 06.01.2016
(51) Int. Cl.: H04W 76/10

(54) **TETHERING CONTROL METHOD AND ELECTRONIC DEVICE THEREFOR**
ANBINDUNGSSTEUERUNGSVERFAHREN UND ELEKTRONISCHE VORRICHTUNG DAFÜR
PROCÉDÉ DE COMMANDE DE FONCTION MODEM ET DISPOSITIF ÉLECTRONIQUE ASSOCIÉ

(30) Priority: 06.01.2015 KR 20150001259
(43) Date of publication of application: 15.11.2017
(73) Proprietor: Samsung Electronics Co., Ltd., Gyeonggi-do 16677 (KR)
(72) Inventor: LEE, Sangki, Seoul 06621 (KR); JEGAL, Yun, Seoul 06339 (KR)
(74) Representative: Nederlandsch Octrooibureau
(86) International application number: PCT/KR2016/000086
(87) International publication number: WO 2016/111537

(56) References cited:
- WO-A1-2014/025240
- WO-A1-2014/069758
- KR-A- 20130 060 072
- KR-A- 20140 100 768
- US-A1- 2013 148 568
- US-A1- 2013 331 028
- US-A1- 2013 331 028
- US-A1- 2014 337 923
- US-A1- 2015 003 432

## Description

### Technical Field

Various embodiments of the present invention relate to an apparatus and a method for remotely controlling a tethering function of a host device in an electronic device.

### Background Art

With the enhancement of information and communication technology and semiconductor technology, various electronic devices have developed into multimedia devices which are capable of providing various multimedia services.

An electronic device may provide a tethering service to be able to use a wireless Internet service via another electronic device. For example, a host device may operate as an access point (AP) to provide a tethering service to a client device. The client device may access the host device operating as the AP through a wireless local area network (LAN) (for example, WiFi) to transmit and receive data for a wireless internet service. US2015003432 discloses an electronic device which, when losing WLAN access to an AP, requests a tethering service to a terminal equipped with a tethering feature and the electronic device connects to a network via the tethering terminal. Upon detecting that connection to an AP is again available, the electronic device sends a tethering ending request to the tethering terminal. US2013331028 discloses a technology by which a target device automatically starts tethering on a source device. A target device sends a request to start tethering to the source device, which responds by starting tethering, independent of needing any user interaction on the source device. The user on the target device may stop the tethering directly via interaction or indirectly such as by shutting the laptop lid, powering down the device and so forth.

### Detailed Description of the Invention

### Technical Objects

When a host device operates as an AP to provide a tethering service to a client device, there may be problems of sudden power consumption of a battery, heating, and charging accompanied by use of data.

In addition, when a client device accesses a host device to use a wireless Internet service, a user may mainly use the client device. However, the user has inconvenience of having to operate the host device in order to control a tethering

Exemplary embodiments of the present invention provide a first electronic device and a method for controlling a tethering service with a second electronic device.

### Technical Solving Means

The invention is defined in the appended set of claims.

### Advantageous Effect

According to the electronic device and the method therefor according to various embodiments, the electronic device operates as a host device only when a client device is required to access the wireless Internet, such that heating, power consumption of a battery, and an amount of used data caused by providing a tethering service can be reduced.

According to the electronic device and the method therefor according to various embodiments, the user of the electronic device can easily control a tethering service by remotely controlling a host device for the tethering service, and also can easily control a plurality of host devices.

### Brief Description of the Drawings

FIG. 1 illustrates a block diagram of an electronic device according to various embodiments of the present invention;
FIG. 2 illustrates a detailed block diagram of a processor of a client device according to various embodiments of the present invention;
FIG. 3 illustrates a detailed block diagram of a processor of a host device according to various embodiments of the present invention;
FIG. 4 illustrates a flowchart for controlling a host device in a client device according to various embodiments of the present invention;
FIG. 5 illustrates a flowchart for identifying tethering state information of a host device in a client device according to various embodiments of the present invention;
FIGs. 6A to 6E illustrate screen configurations for displaying tethering state information of a host device in a client device according to various embodiments of the present invention;
FIG. 7 illustrates a flowchart for detecting a tethering deactivation event in a client device according to various embodiments of the present invention;
FIG. 8 illustrates a flowchart for detecting a tethering deactivation event in a client device according to various embodiments of the present invention;
FIG. 9 illustrates a flowchart for providing a tethering service in a host device according to various embodiments of the present invention;
FIG. 10 illustrates a flowchart for transmitting tethering state information in a host device according to various embodiments of the present invention;
FIG. 11 illustrates a flowchart for controlling a tethering service of a host device in a client device according to various embodiments of the present invention;
FIG. 12 illustrates a flowchart for connecting a communication with a host device in a client device according to various embodiments of the present invention;
FIG. 13 illustrates a flowchart for connecting a communication with a host device in a client device according to various embodiments of the present invention; and
FIG. 14 illustrates a flowchart for providing a tethering service based on control of a client device in a host device according to various embodiments of the present invention.

### Best Mode for Embodying the Invention

Hereinafter, various embodiments of the present invention will be described with reference to accompanying drawings. description of drawings, similar components may be marked by similar reference numerals.

In the disclosure disclosed herein, the expressions "have," "may have," "include" and "comprise," or "may include" and "may comprise" used herein indicate existence of corresponding features (e.g., elements such as numeric values, functions, operations, or components) but do not exclude presence of additional features.

In the disclosure disclosed herein, the expressions "A or B," "at least one of A or/and B," or "one or more of A or/and B," and the like used herein may include any and all combinations of one or more of the associated listed items. For example, the term "A or B," "at least one of A and B," or "at least one of A or B" may refer to all of the case (1) where at least one A is included, the case (2) where at least one B is included, or the case (3) where both of at least one A and at least one B are included.

The terms, such as "first," "second," and the like used herein, may refer to various elements of various embodiments of the present invention, but do not limit the elements. For example, such terms do not limit the order and/or priority of the elements. Furthermore, such terms may be used to distinguish one element from another element. For example, "a first user device" and "a second user device" indicate different user devices regardless of the order or priority. For example, without departing from the scope of the present invention, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or connected to another element or coupled with/to or connected to another element via an intervening element (e.g., a third element). In contrast, when an element (e.g., a first element) is referred to as being "directly coupled with/to" or "directly connected to" another element (e.g., a second element), it should be understood that there is no intervening element (e.g., a third element).

According to the situation, the expression "configured to" used herein may be used as, for example, the expression "suitable for," "having the capacity to," "designed to," "adapted to," "made to," or "capable of". The term "configured to" must not mean only "specifically designed to" in hardware. Instead, the expression "an electronic device configured to" may mean that the electronic device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory electronic device.

Terms used in the present invention are used to describe specified embodiments of the present invention and are not intended to limit the scope of other embodiments. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal way, unless expressly so defined herein in various embodiments of the present invention. In some cases, even if terms are terms which are defined in the specification, they may not be interpreted to exclude embodiments of the present invention.

An electronic device according to various embodiments of the present invention may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices (e.g., smart glasses, head-mounted-devices (HMDs), electronic apparels, electronic bracelets, electronic necklaces, electronic appcessory, electronic tattoos, smart mirrors, or smart watches).

According to certain embodiments, the electronic devices may be smart home appliances. The smart home appliances may include at least one of, for example, televisions (TVs), digital video disk (DVD) players, audios, refrigerators, air conditioners, cleaners, ovens, microwave ovens, washing machines, air cleaners, set-top boxes, home automation control panels, security control panels, TV boxes (e.g., Samsung HomeSync^{™}, Apple TV^{™}, or Google TV^{™}), game consoles (e.g., Xbox^{™} and PlayStation^{™}), electronic dictionaries, electronic keys, camcorders, electronic picture frames, and the like.

According to another embodiment, the electronic devices may include at least one of medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices), navigation electronic devices, global positioning system receivers (GPSs), event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs) of financial institutions, points of sales (POSs) of stores, or internet of things (e.g., light bulbs, various sensors, electric or gas meters, sprinkler devices, fire alarms, thermostats, street lamps, toasters, exercise equipment, hot water tanks, heaters, boilers, and the like).

According to a certain embodiment, the electronic devices may include at least one of a part of furniture or buildings/structures, electronic boards, electronic signature receiving devices, projectors, or various measuring instruments (e.g., water meters, electricity meters, gas meters, or wave meters, and the like). The electronic devices according to various embodiments may be one or more combinations of the above-mentioned devices. According to a certain embodiment, an electronic device may be a flexible electronic device. Also, electronic devices according to various embodiments of the present invention are not limited to the above-mentioned devices, and may include new electronic devices according to technology development

Hereinafter, an electronic device according to various embodiments will be described with reference to the accompanying drawings. The term "user" used in the present invention may refer to a person who uses the electronic device or an electronic device that uses the electronic device (for example, an artificial intelligence electronic device).

Hereinafter, technology for providing a tethering service in an electronic device according to various embodiments of the present invention will be described.

According to various embodiments of the present invention, a host device may indicate an electronic device which provides a wireless Internet service to a client device through a tethering service. A client device may indicate an electronic device which accesses a host device through a tethering service.

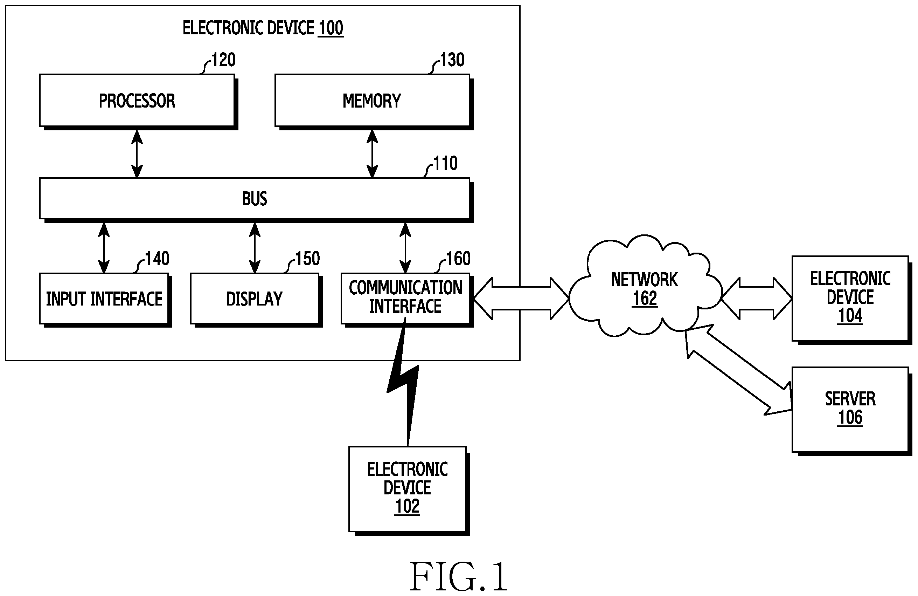

FIG. 1 illustrates a block diagram of an electronic device according to various embodiments of the present invention. In the following description, the electronic device 100 may indicate a host device or a client device.

Referring to FIG. 1, the electronic device 100 may include a bus 110, a processor 120, a memory 130, an input interface 140, a display 150, and a communication interface 160. According to various embodiments of the present invention, the electronic device 100 may omit at least one of the above-described elements or may further include other elements.

The bus 110 may be a circuit which connects the above-described elements (for example, the processor 120, the memory 130, the input interface 140, the display 150, or the communication interface 160) with one another and transmits a communication (for example: a control message) between the above-described elements.

The processor 120 may include one or more of a central processing unit (CPU), an application processor (AP), or a communication processor (CP). For example, the processor 120 may perform calculation or data processing with respect to the control and/or communication of at least one other element of the electronic device 100.

According to one embodiment, the processor 120 may provide a wireless Internet service to a client device (for example, an electronic device 102 or an electronic device 104) which accesses the electronic device 100 through a communication connection (for example, a wireless LAN) for a tethering service. For example, the processor 120 may control the electronic device 100 to operate as a host device for the tethering service.

According to one embodiment, the processor 120 may control the tethering service of the electronic device 100 (for example, the host device) based on a tethering control signal provided from the client device. For example, when the processor 120 receives a tethering deactivation request signal from the client device, the processor 120 may deactivate the tethering service. For example, when the processor 120 receives a tethering activation request signal from the client device, the processor 120 may activate the tethering service and provide the tethering service to the client device.

According to one embodiment, the processor 120 may control the electronic device 100 to access a host device (for example, the electronic device 102 or the electronic device 104) through a communication connection (for example, a wireless LAN) for a tethering service. For example, the processor 120 may control the electronic device 100 to operate as a client device for the tethering service.

According to one embodiment, the processor 120 may control the tethering service of the host device to correspond to an operation state of the electronic device 100. For example, the processor 120 may control to transmit a tethering deactivation request signal to the host device in response to a tethering deactivation event occurring while providing the tethering service. For example, the processor 120 may control to transmit a tethering activation request signal to the host device in response to a tethering activation event occurring.

The memory 130 may store a command or data related to at least one other element of the electronic device 100. According to one embodiment, the memory 130 may store an application program installed in the electronic device 100 and software and/or programs for operating the electronic device 100.

The input interface 140 may include an inputting means for forwarding a command or data inputted from a user or another external device to the other element(s) of the electronic device 100. For example, the input interface 140 may include a key pad, a dome switch, a physical button, a touch panel, and a jog & shuttle, and a sensor.

The display 150 may display display data such as various contents (for example, a text, an image, a video, an icon, a symbol, or the like). For example, the display 150 may include a liquid crystal display (LCD), a light-emitting diode (LED) display, an organic LED (OLED) display, or a microelectromechanical systems (MEMS) display, or an electronic paper display. For example, the communication interface 160 may connect a communication between the electronic device 100 and an external electronic device (for example, the electronic device 102, the electronic device 104, or a server 106). For example, the communication interface 160 may be connected to a network 162 via a wireless communication or wired communication to communicate with an external electronic device.

For example, the wireless communication may include a short range communication protocol or a cellular communication protocol. Herein, the short range communication protocol may include at least one of a wireless LAN, wireless fidelity (WiFi), Bluetooth, near field communication (NFC), Bluetooth low energy (BLE), or a global positioning system (GPS).

For example, the cellular communication protocol may use at least one of long term evolution (LTE), LTE Advanced (LTE-A), code division multiple access (CDMA), wide-CDMA (WCDMA), universal mobile telecommunication system (UMTS), Wireless Broadband (WiBro), Global System for Mobile Communications (GSM), or the like.

For example, the wired communication may include at least one of a universal serial bus (USB), a high definition multimedia interface (HDMI), a recommended standard-232 (RS-232), or a plain old telephone service (POTS).

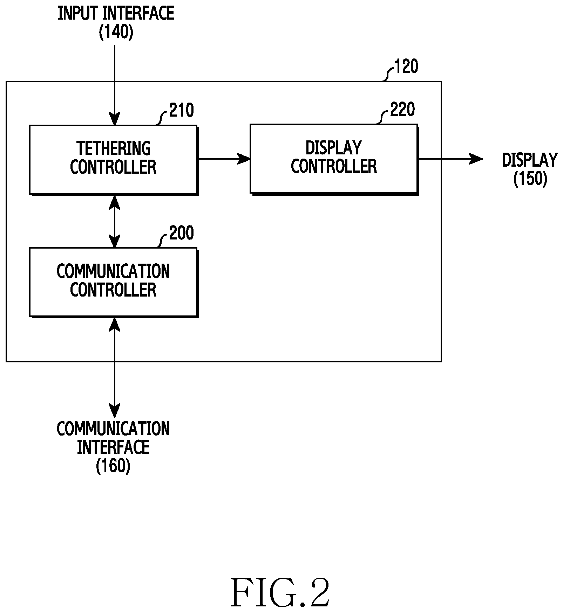

When the electronic device 100 operates as a client device according to various embodiments of the present invention, the processor 120 may be configured as shown in FIG. 2 described below.

FIG. 2 illustrates a detailed block diagram of a processor of a client device according to various embodiments of the present invention.

Referring to FIG. 2, the processor 120 of the client device may include a communication controller 200, a tethering controller 210, and a display controller 220.

According to one embodiment, the communication controller 200 may access a host device using a communication method (for example, WiFi) for a tethering service. For example, the communication controller 200 may access a host device of a tethering service in response to a tethering connection event occurring. For example, the communication method for the tethering service may include a wireless LAN (for example, WiFi).

According to one embodiment, the communication controller 200 may connect a communication with the host device using a communication method separate from the communication method for the tethering service. For example, the separate communication method may include Bluetooth or BLE which is a short range communication method different from the communication method for the tethering service.

According to one embodiment, the tethering controller 210 may control to deactivate the tethering service of the host device based on an operation state of the electronic device 100. For example, when driving of an application program requiring access to a network (for example, a wireless Internet) is terminated, the tethering controller 210 may control to transmit a tethering deactivation request signal to the host device. Additionally, when there is no application program driven as a background and requiring access to a network, the tethering controller 210 may control to transmit the tethering deactivation request signal to the host device. For example, when the display 150 is deactivated, the tethering controller 210 may control to transmit the tethering deactivation request signal to the host device. Additionally, when there is no ongoing event (for example, downloading data), the tethering controller 210 may control to transmit the tethering deactivation request signal to the host device. For example, a lock of the electronic device 100 may be set or the display 150 may be deactivated to reduce power consumption of the electronic device 100. For example, when an input corresponding to a tethering deactivation event is detected through the input interface 140, the tethering controller 210 may control to transmit the tethering deactivation request signal to the host device. For example, the input corresponding to the tethering deactivation event may include at least one of selecting an icon corresponding to the tethering deactivation event, selecting a menu, and detecting a motion of the electronic device 100.

According to one embodiment, the communication controller 210 may transmit the tethering deactivation request signal to the host device using the communication method for the tethering service or the separate communication method (for example, Bluetooth or BLE).

According to one embodiment, the tethering controller 210 may control to activate the tethering service of the host device based on an operation state of the electronic device 100. For example, when an application program requiring access to a network (for example, wireless Internet) is driven, the tethering controller 210 may control to transmit a tethering activation request signal to the host device. For example, when the electronic device 100 is unlocked, the tethering controller 210 may control to transmit the tethering activation request signal to the host device. For example, when an input corresponding to a tethering activation event is detected through the input interface 140, the tethering controller 210 may control to transmit the tethering activation request signal to the host device. For example, the input corresponding to the tethering activation event may include at least one of selecting an icon corresponding to the tethering activation event, selecting a menu, and detecting a motion of the electronic device 100.

According to one embodiment, the communication controller 200 may transmit the tethering activation request signal to the host device using the separate communication method (for example, Bluetooth or BLE).

According to one embodiment, the display controller 220 may control the display 150 to display tethering state information of the host device which is provided from the tethering controller 210. For example, the tethering state information may include an amount of used electric charge of a battery of the host device (for example, a remaining battery capacity), and an amount of used data of the host device according to the tethering service.

In the case of FIG. 2, the processor 120 may include a plurality of modules for controlling the tethering service of the host device that the electronic device 100 accesses.

According to various embodiments of the present invention, the processor 120 may control the tethering service of the host device that the electronic device 100 accesses using at least one functionally or physically separated module. For example, at least one module of the communication controller 200, the tethering controller 210, and the display controller 220 described above may be functionally or physically separated from the processor 120.

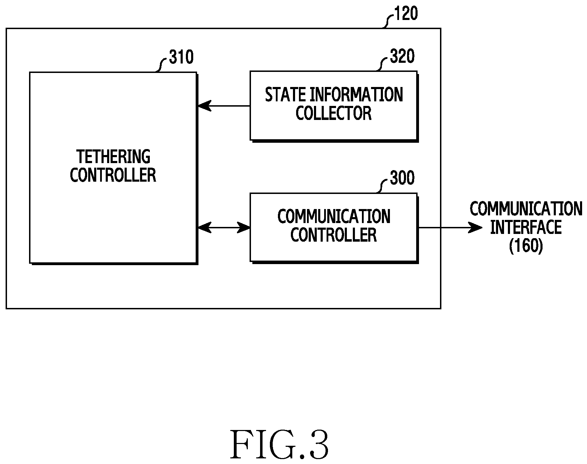

When the electronic device 100 operates as a host device according to various embodiments of the present invention, the processor 120 may be configured as shown in FIG. 3 described below.

FIG. 3 illustrates a detailed block diagram of a processor of a host device according to various embodiments of the present invention.

Referring to FIG. 3, the processor 120 of the host device may include a communication controller 300, a tethering controller 310, and a state information collector 320.

According to one embodiment, the communication controller 300 may connect a communication with a client device in a communication method (for example, WiFi) for a tethering service. For example, the communication controller 300 may activate a module (for example, a wireless LAN module) for the tethering service in response to a tethering connection event occurring, and may operate as an access point (AP) of a wireless LAN. The communication controller 300 may approve wireless LAN access of the client device and may connect a communication with the client device.

According to one embodiment, the communication controller 300 may connect a communication with the client device using a communication method separate from the communication method for the tethering service. For example, the communication controller 300 may connect a communication with the client device using the separate communication method in response to a communication connection request of the client device. For example, the separate communication method may include Bluetooth or BLE which is a short range communication method different from the communication method for the tethering service.

According to one embodiment, the tethering controller 310 may deactivate the tethering service of the electronic device (for example, the host device) based on the control of the client device. For example, when the tethering controller 310 receives a tethering deactivation request signal from the client device while providing the tethering service to the client device, the tethering controller 310 may deactivate the tethering service. For example, the tethering controller 310 may deactivate a module for the tethering service.

The communication controller 300 may receive the tethering deactivation request signal from the client device using the communication method for the tethering service or the separate communication method (for example, Bluetooth or BLE).

According to one embodiment, the tethering controller 310 may activate the tethering service of the electronic device 100 (for example, the host device) based on the control of the client device. For example, when a tethering activation request signal is received from a client device having a history of having connected a communication for the tethering service, the tethering controller 310 may activate the tethering service. For example, the tethering controller 310 may activate a module for the tethering service and may control to connect a communication with the client device in the communication method (for example, WiFi) for the tethering service.

The communication controller 300 may receive the tethering activation request signal from the client device using the separate communication method (for example, Bluetooth or BLE).

According to one embodiment, when the tethering service is provided to the client device, the state information collector 320 may collect state information of the electronic device 100. For example, the state information collector 320 may collect an amount of data used by providing a wireless Internet service to the client device through the tethering service. For example, the state information collector 320 may collect an amount of used electric charge of the battery of the electronic device 100 (for example, a remaining battery capacity) accompanied by providing of the tethering service.

The communication controller 300 may transmit, to the client device, the tethering state information which includes at least one of the amount of used data and the amount of used electric charge of the battery which are collected by the state information collector 320.

In the case of FIG. 3, the processor 120 may include a plurality of modules for controlling the tethering service of the electronic device 100 based on the control of the client device which accesses the electronic device 100.

According to various embodiments of the present invention, the processor 120 may control the tethering service of the electronic device 100 based on the control of the client device which accesses the electronic device 100 using at least one functionally or physically separated module. For example, at least one module of the communication controller 300, the tethering controller 310, and the state information collector 320 described above may be functionally or physically separated from the processor 120.

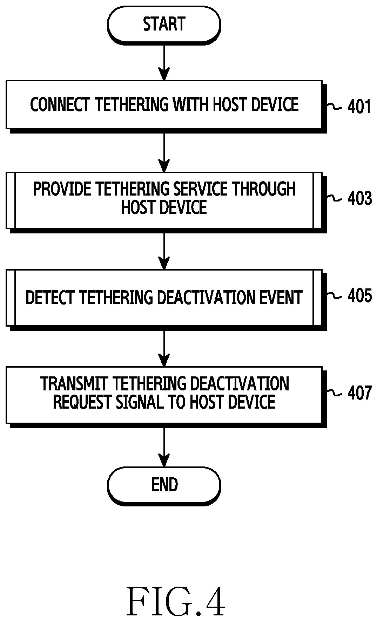

FIG. 4 illustrates a flowchart for controlling a host device in a client device according to various embodiments of the present invention.

Referring to FIG. 4, in operation 401, the client device (for example, the electronic device 100 of FIG. 1, the processor 120 of FIG. 2) may connect a communication (for example, WiFi) for a tethering service with the host device. For example, the client device may identify the host device for a tethering connection in response to a tethering connection event occurring. For example, the client device may select the host device based on input information detected through the input interface 140. The client device may access the host device for the tethering connection and may connect the communication for the tethering service with the host device.

In operation 403, the client device may provide the tethering service through the host device connecting the communication with the client device. For example, the client device may transmit and receive data for a wireless Internet service through the host device.

In operation 405, the client device may detect a tethering deactivation event based on an operation state of the client device. For example, the operation state of the client device may include at least one of driving information of an application program for using a network, locking state information of the client device, and activation information of the display of the client device.

In operation 407, the client device may transmit a tethering deactivation request signal to the host device in response to the tethering deactivation event being detected. For example, the client device may transmit the tethering deactivation request signal to the host device through a communication method for the tethering service. For example, when the client device connects a communication with the host device using a communication method separate from the communication method for the tethering service, the client device may transmit the tethering deactivation request signal to the host device through the separate communication method. For example, the separate communication method may include Bluetooth or BLE which is a short range communication method different from the communication method for the tethering service.

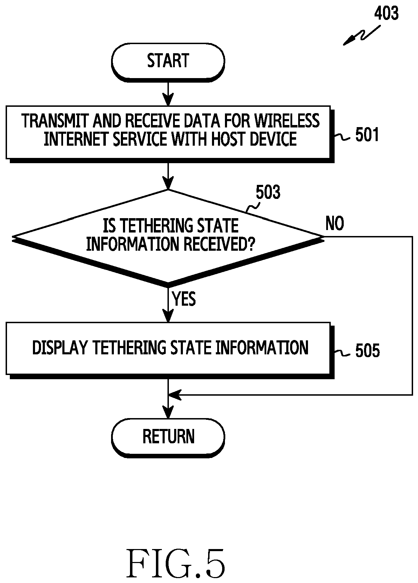

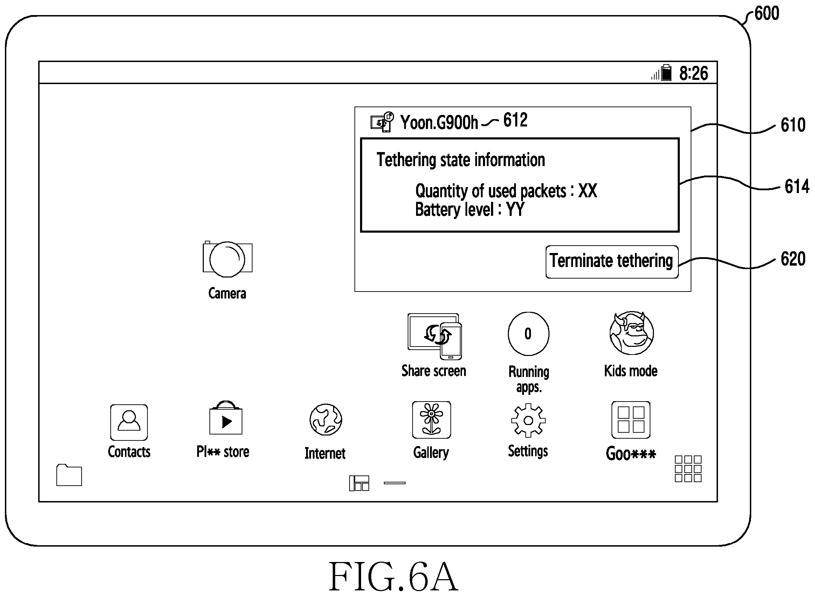

FIG. 5 illustrates a flowchart for identifying tethering state information of a host device in a client device according to various embodiments of the present invention. In the following description, an operation of displaying tethering state information of the host device will be described with reference to screen configurations shown in FIGs. 6A to 6E. In the following description, the operation of providing the tethering service through the host device in FIG. 4 will be described.

Referring to FIG. 5, in operation 501, the client device (for example, the electronic device 100 of FIG. 1, the processor 120 of FIG. 2) may transmit and receive data for the wireless Internet service through the host device. For example, when the client device connects the communication for the tethering service with the host device in operation 401 of FIG. 4, the client device may transmit and receive data for the wireless Internet service to and from the host device.

In operation 503, the client device may determine whether tethering state information is received from the host device. For example, the client device may determine whether tethering state information is received from the host device through the communication method for the tethering service. For example, the client device may determine whether tethering state information is received from the host device through the communication method separate from the communication method for the tethering service.

In operation 505, when the tethering state information is received from the host device, the client device may display the tethering state information of the host device on at least a part of the display (for example, the display 150).

According to one embodiment, in the case of FIG. 6A, a client device 600 may display a widget 610 for a tethering service on at least a part of the display (for example, the display 150). The widget 610 for the tethering service may include host device information 612 (for example, a host device name) and tethering state information 614 of the host device. The widget 610 for the tethering service may further include a tethering termination button 620 (or a tethering termination icon) for the user to control to deactivate the tethering service of the host device. For example, when the client device 600 detects an input of the tethering termination button 620 through the input interface 140, the client device 600 may determine that a tethering deactivation event occurs. The client device 600 may transmit a tethering deactivation request signal to the host device in response to the tethering deactivation event occurring.

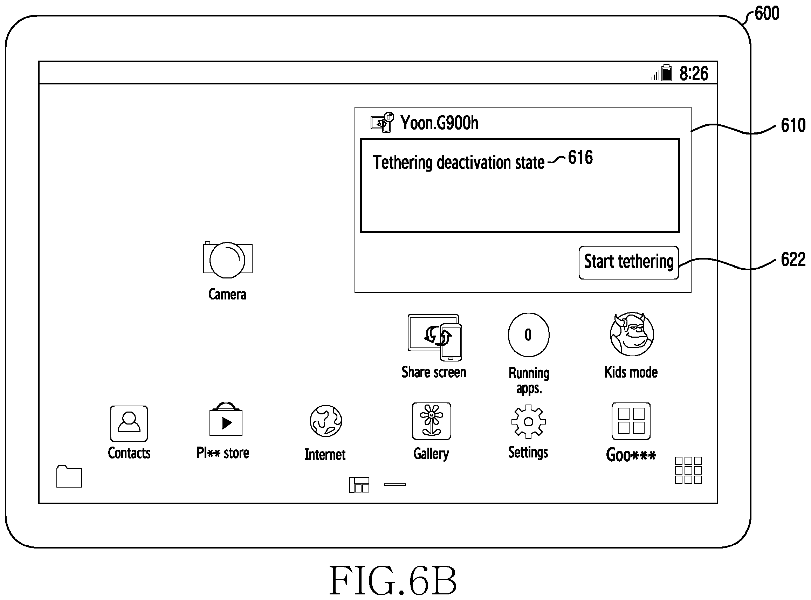

According to one embodiment, when the tethering service of the host device is deactivated in response to the tethering deactivation request signal, the client device 600 may display the tethering state information 614 of the widget 610 for the tethering service as "tethering deactivation state" 616 as shown in FIG. 6B. The widget 610 for the tethering service may further include a tethering start button 622 (or a tethering start icon) for the user to control to activate the tethering service of the host device. For example, when an input of the tethering start button 622 is detected through the input interface 140, the client device 600 may determine that a tethering activation event occurs. The client device 600 may transmit a tethering activation request signal to the host device in response to the tethering activation event occurring.

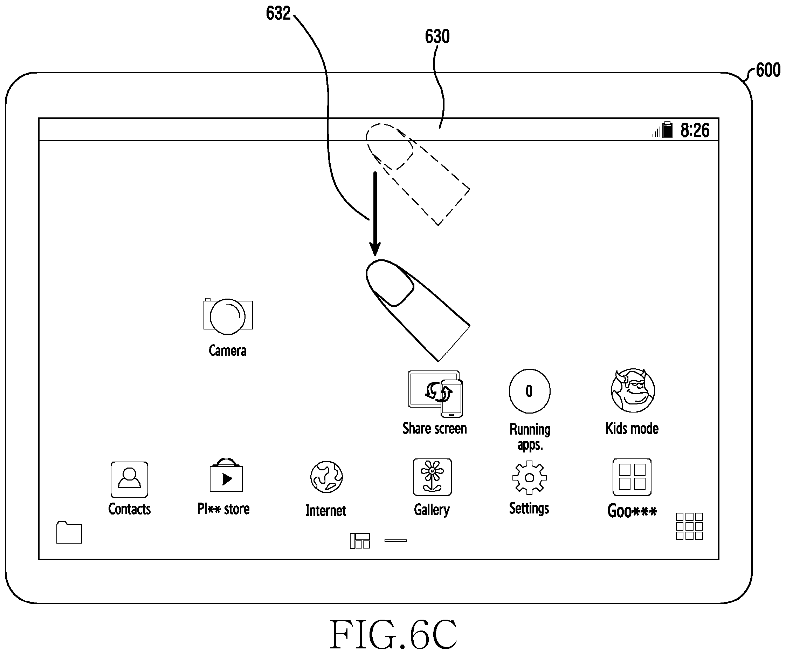

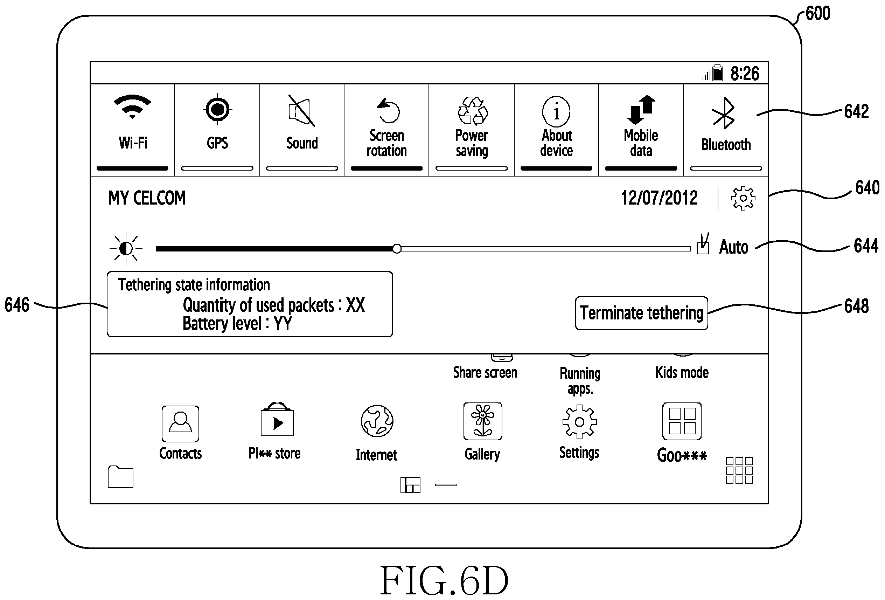

According to one embodiment, in response to a drag input 632 in a state display bar 630 as shown in FIG. 6C, the client device 600 may display a notification panel 640 on the display as shown in FIG. 6D. The notification panel 640 may include at least one basic setting button 642, a brightness adjustment bar 644, and tethering state information 646. The tethering state information 646 may further include a tethering termination button 648 (or a tethering termination icon) for the user to control to deactivate the tethering service of the host device. For example, when an input of the tethering termination button 648 is detected through the input interface 140, the client device 600 may determine that a tethering deactivation event occurs. The client device 600 may transmit a tethering deactivation request signal to the host device in response to the tethering deactivation event occurring. For example, the tethering state information 646 may be displayed on at least a part of an ongoing event information display region.

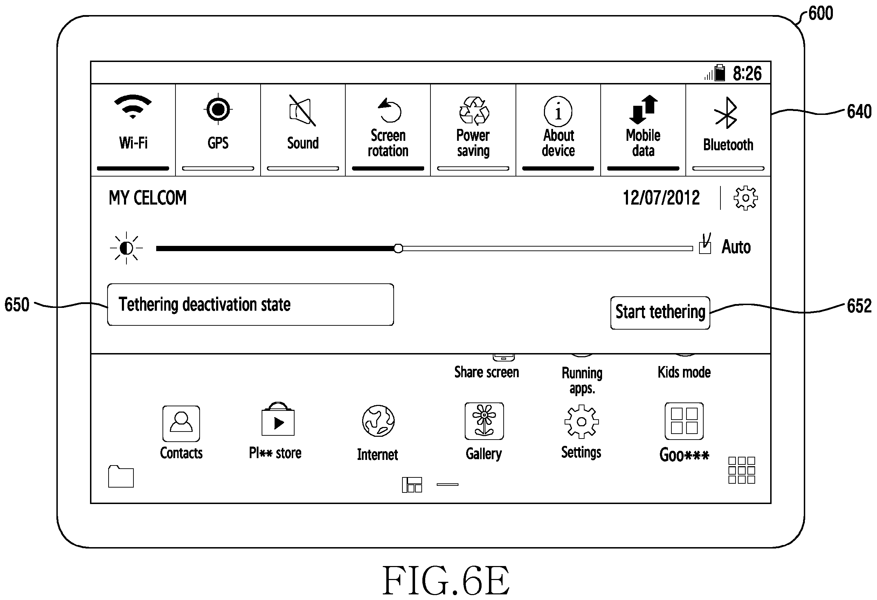

According to one embodiment, when the tethering service of the host device is deactivated in response to the tethering deactivation request signal, the client device 600 may display the tethering state information 646 of the notification panel 640 as "tethering deactivation state" 650 as shown in FIG. 6E. The tethering state information 646 may further include a tethering start button 652 (or a tethering start icon) for the user to control to activate the tethering service of the host device. For example, when an input of the tethering start button 652 is detected through the input interface 140, the client device 600 may determine that a tethering activation event occurs. The client device 600 may transmit a tethering activation request signal to the host device in response to the tethering activation event occurring.

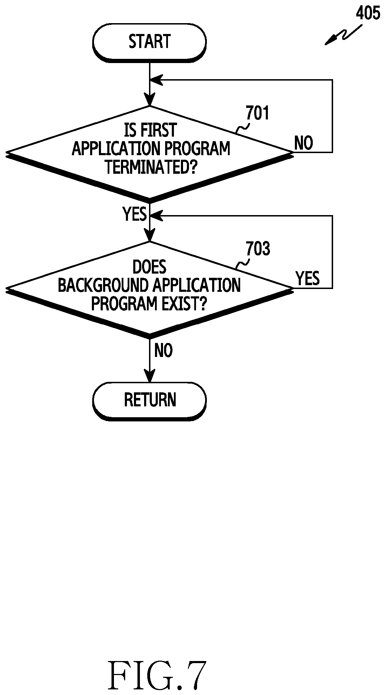

FIG. 7 illustrates a flowchart for detecting a tethering deactivation event in a client device according to various embodiments of the present invention. In the following description, the operation of detecting the tethering deactivation event in FIG. 4 will be described.

Referring to FIG. 7, in operation 701, the client device (for example, the electronic device 100 of FIG. 1, the processor 120 of FIG. 2) may determine whether driving of a first application program requiring access to a network is terminated while providing the tethering service. For example, the client device may drive the first application program which requires access to the network through the tethering service in operation 403 of FIG. 4. In this case, the client device may determine whether the driving of the first application program is terminated or not.

When the driving of the first application program is not terminated, the client device may determine whether the driving of the first application program is terminated again while providing the tethering service.

In operation 703, when the driving of the first application program is terminated, the client device may determine whether there is an application program driven as a background and requiring access to the network. For example, the application program which is driven as the background and requires access to the network may include an application program for synchronizing data with another electronic device.

When there is an application program driven as the background and requiring access to the network, the client device may determine whether the driving of the application program driven as the background and requiring access to the network is terminated.

When there is no application program driven as the background and requiring access to the network, the client device may determine that a tethering deactivation event occurs.

According to various embodiments of the present invention, when the driving of the first application program requiring access to the network is terminated while the tethering service is being provided, the client device may determine that the tethering deactivation event occurs.

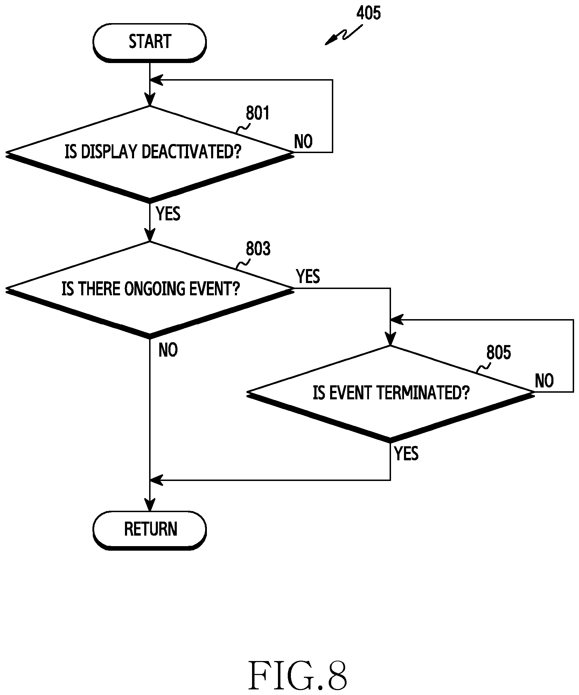

FIG. 8 illustrates a flowchart for detecting a tethering deactivation event in a client device according to various embodiments of the present invention. In the following description, the operation of detecting the tethering deactivation event in FIG. 4 will be described.

Referring to FIG. 8, in operation 801, the client device (for example, the electronic device 100 of FIG. 1, the processor 120 of FIG. 2) may determine whether the display (for example, the display 150) is deactivated while providing the tethering service. For example, the client device may determine whether the display is deactivated as a locking event of the client device occurs. For example, the client device may determine whether the display is deactivated to reduce power consumption of the client device. For example, the client device may determine whether the display is deactivated based on input information which is detected through the input interface 140.

When the display is not deactivated, the client device may determine whether the display is deactivated again while providing the tethering service.

When the display is deactivated, the client device may determine whether there is an ongoing event in operation 803. For example, the ongoing event may include downloading data, uploading data, or the like.

When there is no ongoing event, the client device may determine that a tethering deactivation event occurs.

When there is an ongoing event, the client device may determine whether the event is terminated in operation 805.

When the ongoing event is not terminated, the client device may determine whether the ongoing event is terminated again.

When the ongoing event is terminated, the client device may determine that the tethering deactivation event occurs.

According to various embodiments of the present invention, when the display is deactivated but an application program for transmitting and receiving data intermittently is driven, the client device may determine that the tethering deactivation event occurs at a time when a reference time elapses since the display was deactivated.

According to various embodiments of the present invention, when the display is deactivated, the client device may determine that the tethering deactivation event occurs.

According to various embodiments of the present invention, the client device may determine that the tethering deactivation event occurs based on input information detected through the input interface 140.

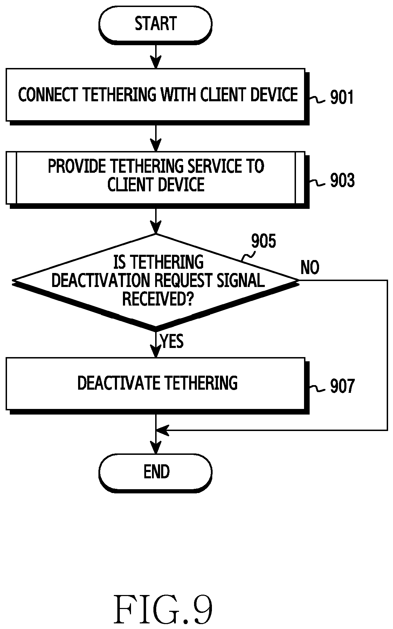

FIG. 9 illustrates a flowchart for providing a tethering service in a host device according to various embodiments of the present invention. In the following description, an operation of a host device providing a tethering service to a client device which operates as shown in FIG. 4 will be described.

Referring to FIG. 9, in operation 901, the host device (for example, the electronic device 100 of FIG. 1, the processor 120 of FIG. 3) may connect a communication (for example, WiFi) for a tethering service with the client device. For example, the host device may operate as an AP of a communication method for a tethering connection in response to a tethering connection event occurring. The host device may connect a communication for a tethering service with the client device based on a communication connection request of the client device.

In operation 903, the host device may provide the tethering service to the client device connecting the communication with the host device. For example, the host device may transmit and receive data for a wireless Internet service to and from the client device.

In operation 905, the host device may determine whether a tethering deactivation request signal is received from the client device or not.

When the tethering deactivation request signal is not received from the client device, the host device may provide the tethering service to the client device.

When the tethering deactivation request signal is received from the client device, the host device may deactivate the tethering service in operation 907. For example, the host device may deactivate a module (for example, a wireless LAN module) for the tethering service. For example, the host device may block access to a network for the tethering service.

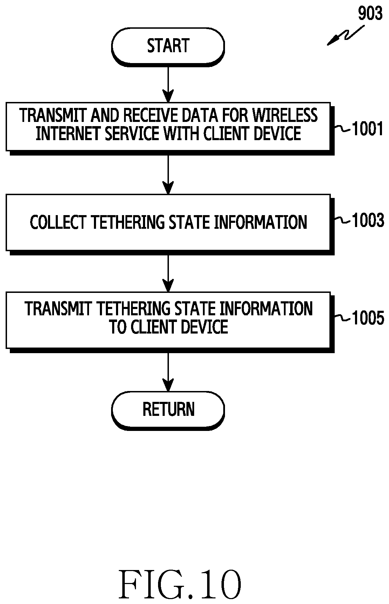

FIG. 10 illustrates a flowchart for transmitting tethering state information in a host device according to various embodiments of the present invention. In the following description, the operation of providing the tethering service to the client device in FIG. 9 will be described.

Referring to FIG. 10, in operation 1001, the host device (for example, the electronic device 100 of FIG. 1, the processor 120 of FIG. 3) may transmit and receive the data for the wireless Internet service to and from the client device.

In operation 1003, the host device may collect state information of the host device as it provides the tethering service. For example, the host device may collect an amount of data used by providing the wireless Internet service to the client device through the tethering service using the state information collector 320. For example, the host device may collect an amount of used electric charge (for example, a remaining battery capacity) of the battery of the host device accompanied by providing of the tethering service using the state information collector 320.

In operation 1005, the host device may transmit, to the client device, the state information of the host device accompanied by providing of the tethering service, which is collected in operation 1003. For example, the host device may transmit the state information of the host device accompanied by providing of the tethering service to the client device in response to a state information transmission event occurring. For example, the state information transmission event may be periodically generated. For example, the state information transmission event may be generated according to whether the state information of the host device collected in operation 1003 is mapped onto at least one event condition.

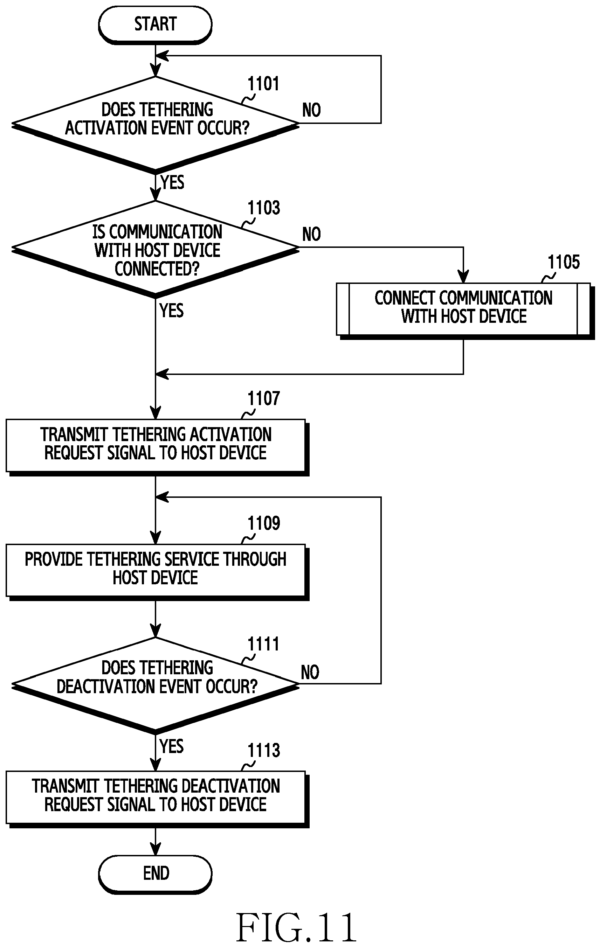

FIG. 11 illustrates a flowchart for controlling a tethering service of a host device in a client device according to various embodiments of the present invention. In the following description, it is assumed that the client device stores a history of having connected a communication for a tethering service with the host device as shown in FIG. 4.

Referring to FIG. 11, in operation 1101, the client device (for example, the electronic device 100 of FIG. 1, the processor 120 of FIG. 2) may determine whether a tethering activation event occurs. For example, the client device may determine whether an application program requiring use of a network is driven or not. For example, the client device may determine whether an unlocking event occurs. For example, the client device may determine whether an input corresponding to the tethering activation event is detected through the input interface 140. For example, the input corresponding to the tethering activation event may include at least one of selecting an icon corresponding to the tethering activation event, selecting a menu corresponding to the tethering activation event, and detecting a motion corresponding to the tethering activation event.

When the tethering activation event occurs, the client device may determine whether a communication with the host device is connected in operation 1103. For example, the client device may determine whether the communication with the host device is connected in a communication method (for example, Bluetooth or BLE) separate from a communication method for the tethering service.

When the communication with the host device is not connected, the client device may connect a communication with the host device in the communication method separate from the communication method for the tethering service in operation 1105.

When the communication with the host device is connected, the client device may transmit a tethering activation request signal to the host device in operation 1107. For example, the client device may transmit the tethering activation request signal to the host device through a Bluetooth or BLE communication connection connected with the host device.

In operation 1109, the client device may access the host device and provide the tethering service. For example, the client device may transmit and receive data for a wireless Internet service to and from the host device through the communication method for the tethering service. Additionally, the client device may display state information of the host device for the tethering service on the display while providing the tethering service as shown in FIG. 5.

In operation 1111, the client device may determine whether a tethering deactivation event occurs while providing the tethering service. For example, the client device may determine whether the tethering deactivation event occurs as shown in FIG. 7 or 8.

When the tethering deactivation event does not occur, the client device may continuously provide the tethering service.

When the tethering deactivation event occurs, the client device may transmit a tethering deactivation request signal to the host device in operation 1113. For example, the client device may transmit the tethering deactivation request signal to the host device through the communication connection (for example, a wireless LAN) for the tethering service. For example, the client device may transmit the tethering deactivation request signal to the host device through a communication connection for the communication method (for example, Bluetooth or BLE) separate from the communication method for the tethering service.

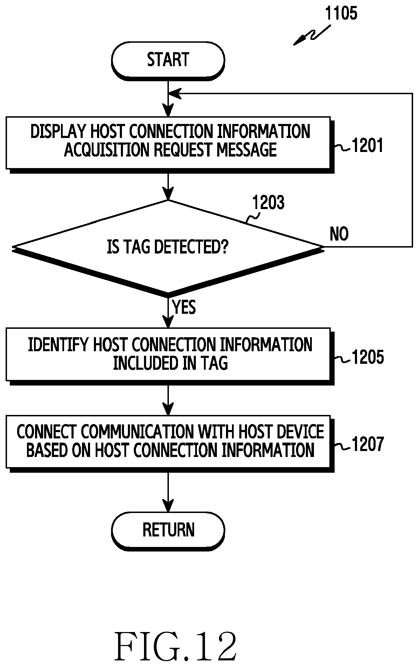

FIG. 12 illustrates a flowchart for connecting a communication with a host device in a client device according to various embodiments of the present invention. In the following description, the operation of connecting the communication with the host device in the communication method separate from the communication method for the tethering service in FIG. 11 will be described.

Referring to FIG. 12, in operation 1201, the client device (for example, the electronic device 100 of FIG. 1, the processor 120 of FIG. 2) may display a host connection information acquisition request message on the display (for example, the display 150). For example, when the communication with the host device is not connected in the separate communication method in operation 1103 of FIG. 11, the client device may display the host connection information acquisition request message on the display. For example, the host connection information may include information (for example, an identifier of a host device (service set identifier (SSID)) and an access password) for connecting a communication with the host device in the separate communication method.

In operation 1203, the client device may determine whether tag information is detected or not. For example, the client device may determine whether tag information of the host device is detected through a functionally or physically connected camera module. For example, the tag may include a radio frequency (RF) tag or a near field communication (NFC) tag.

When the tag information of the client device is not detected, the client device may continue to display the host connection information acquisition request message. For example, when the tag information is not detected until a reference time elapses since the host connection information acquisition request message was displayed, the client device may determine that it is impossible to connect the communication with the host device. Accordingly, the client device may display communication connection restriction information with the host device on the display.

When the tag information of the host device is detected, the client device may identify host connection information included in the tag information in operation 1205.

In operation 1207, the client device may connect the communication with the host device in the communication method separate from the communication method for the tethering service based on the host connection information. For example, the client device may transmit a Bluetooth (or BLE) connection request signal to the host device based on the host connection information. When a Bluetooth (or BLE) connection acceptance signal is received from the host device, the client device may connect the communication with the host device using Bluetooth (or BLE).

According to one embodiment, when a Bluetooth (or BLE) connection restriction signal is received from the host device, the client device may determine that it is impossible to connect the communication with the host device. Accordingly, the client device may display the communication connection restriction information with the host device on the display.

According to one embodiment, when a response signal is not received from the host device until a reference time elapses since the Bluetooth (or BLE) connection request signal was transmitted, the client device may determine that it is impossible to connect the communication with the host device. Accordingly, the client device may display the communication connection restriction information with the host device on the display.

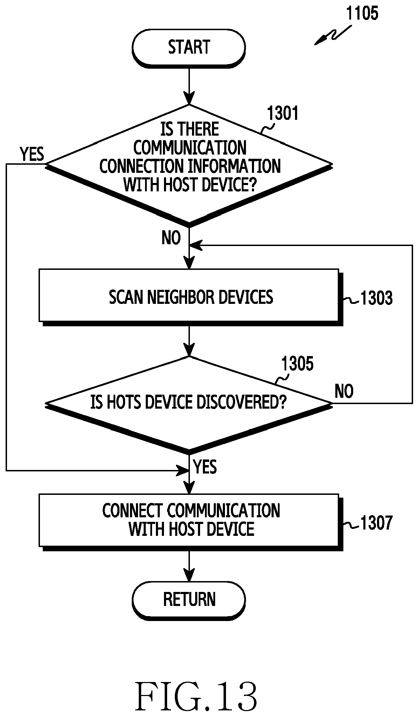

FIG. 13 illustrates a flowchart for connecting a communication with a host device in a client device according to various embodiments of the present invention. In the following description, the operation of connecting the communication with the host device in the communication method separate from the communication method for the tethering service in FIG. 11 will be described.

Referring to FIG. 13, in operation 1301, the client device (for example, the electronic device 100 of FIG. 1, the processor 120 of FIG. 2) may determine whether there is communication connection information with the host device. For example, the client device may determine whether there is communication connection information with the host device in the memory 130 when the communication with the host device is not connected in the separate communication method in operation 1103 of FIG. 11.

When there is the communication connection information with the host device, the client device may connect the communication with the host device in the communication method separate from the communication method for the tethering service based on the communication connection information with the host device in operation 1307.

In operation 1303, the client device may scan neighbor devices when there is no communication connection information with the host device.

In operation 1305, the client device may determine whether the host device is discovered by scanning the neighbor devices. For example, the client device may determine whether the host device is discovered based on the history of having connected the communication for the tethering service with the host device.

When the host device is not discovered by scanning the neighbor devices, the client device may continuously scan the neighbor devices. For example, when the host device is not discovered until a reference time elapses, the client device may determine that it is impossible to connect the communication with the host device. Accordingly, the client device may display the communication connection restriction information with the host device on the display.

When the host device is discovered, the client device may connect the communication with the host device in the communication method separate from the communication method for the tethering service in operation 1307. For example, the client device may transmit a Bluetooth (or BLE) connection request signal to the host device. When a Bluetooth (or BLE) connection acceptance signal is received from the host device, the client device may connect the communication with the host device using Bluetooth (or BLE).

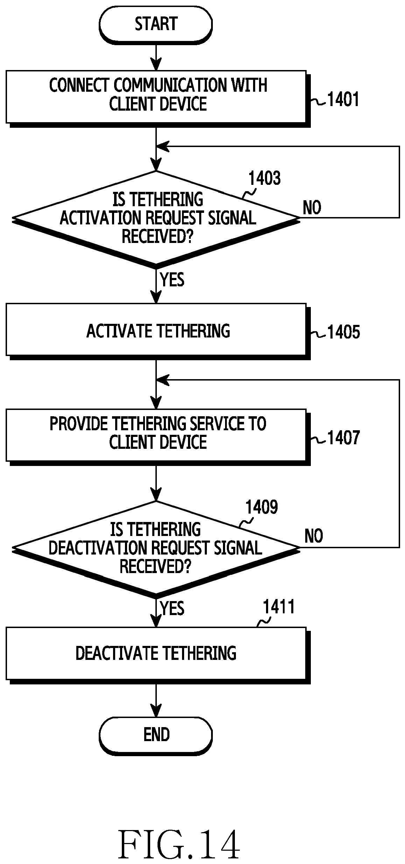

FIG. 14 illustrates a flowchart for providing a tethering service based on control of a client device in a host device according to various embodiments of the present invention. In the following description, an operation of the host device providing a tethering service to the client device operating as shown in FIG. 11 will be described. In the following description, it is assumed that the host device stores a history of having connected a communication for a tethering service with the client device as shown in FIG. 9.

Referring to FIG. 14, in operation 1401, the host device may connect a communication with the client device. For example, the host device may connect the communication with the client device in a communication method (for example, Bluetooth or BLE) separate from a communication method for the tethering service.

In operation 1403, the host device may determine whether a tethering activation request signal is received from the client device through the separate communication method.

When the tethering activation request signal is received from the client device through the separate communication method, the host device may activate the tethering service in operation 1405. For example, the host device may activate a module (wireless LAN module) for the tethering service. For example, the host device may activate access to a network (wireless Internet network) for the tethering service.

In operation 1407, the host device may provide the tethering service to the client device. For example, the host device may transmit and receive data for a wireless Internet service to and from the client device through the communication method for the tethering service. Additionally, the host device may collect state information of the host device for the tethering service while providing the tethering service as shown in FIG. 10, and transmit the state information to the client device.

In operation 1409, the host device may determine whether a tethering deactivation request signal is received from the client device. For example, the host device may determine whether the tethering deactivation request signal is received from the client device through a communication connection (for example, a wireless LAN) for the tethering service. For example, the host device may determine whether the tethering deactivation request signal is received from the client device through a communication connection for the communication method (for example, Bluetooth or BLE) separate from the communication method for the tethering service.

When the tethering deactivation request signal is not received from the client device, the host device may provide the tethering service to the client device.

When the tethering deactivation request signal is received from the client device, the host device may deactivate the tethering service in operation 1411.

The term "module" used herein may represent, for example, a unit including one or more combinations of hardware, software and firmware. The term "module" may be interchangeably used with the terms "unit," "logic," "logical block," "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a portion of an electronic device (e.g., modules or functions thereof) or a method (e.g., operations) example, may be implemented by instructions stored in a computer-readable storage media in the form of a programmable module. The instruction, when executed by one or more processors (e.g., the processor 220), may perform a function corresponding to the instruction. The computer-readable storage media, for example, may be the memory 230.

A computer-readable recording media may include a hard disk, a floppy disk, a magnetic media (e.g., a magnetic tape), an optical media (e.g., compact disc read only memory (CD-ROM) and a digital versatile disc (DVD), a magneto-optical media (e.g., a floptical disk), and a hardware electronic device (e.g., read only memory (ROM), random access memory (RAM), a flash memory, or the like). Also, a program instruction may include not only a mechanical code such as things generated by a compiler but also a high-level language code executable on a computer using an interpreter. The above-described hardware electronic device may be configured to operate as one or more software modules for performing an operation of various embodiments, and vice versa.

A module or a programming module according to various embodiments may include at least one of the above elements, or a portion of the above elements may be omitted, or additional other elements may be further included. Operations performed by a module, a program module, or other elements according to various embodiments may be executed sequentially, in parallel, repeatedly, or in a heuristic method. Also, a portion of operations may be executed in different sequences, omitted, or other operations may be added.

Embodiments disclosed in the present invention are suggested for easy explanation and understanding of the technical features disclosed herein and are not intended to limit the scope of various embodiments of the present invention, which is defined in the appended set of claims.

## Claims

1. A first electronic device comprising:
a communication interface;
a display; and
a processor configured to control a tethering service with a second electronic device, the processor is configured to:
control the communication interface to connect a communication for a tethering service with the second electronic device;
control the communication interface to transmit and receive data corresponding to the tethering service to and from the second electronic device; and
control the communication interface to transmit a tethering deactivation request signal to the second electronic device in response to a tethering deactivation event occurring,
wherein the processor is further configured to generate the tethering deactivation event based on an event of detecting an input on a tethering termination button mapped onto the tethering deactivation event;
wherein the processor is further configured to control the communication interface to receive tethering state information from the second electronic device through the communication interface, and control the display to display the tethering state information and the tethering termination button on the display, and
wherein the tethering state information comprises an amount of used data corresponding to the tethering service.

2. The first electronic device of claim 1, wherein the communication interface is configured to transmit the tethering deactivation request signal to the second electronic device through the communication for the tethering service or a communication connection separate from the communication for the tethering service.

3. The first electronic device of claim 2, wherein the communication interface for the tethering service is further configured to provide a wireless LAN method,
wherein the separate communication connection is further configured to provide at least one communication method of Bluetooth and BLE.

4. The first electronic device of claim 1, wherein the processor is configured to:
control the communication interface to transmit a tethering activation request signal to the second electronic device through a communication connection separate from the communication for the tethering service in response to a tethering activation event occurring; and
control the communication interface to transmit and receive data corresponding to an Internet service through the communication connection for the tethering service with the second electronic device.

5. The first electronic device of claim 4, wherein the processor is further configured to generate the tethering activation event based on at least one of an event of unlocking the first electronic device, an event of driving an application program requiring use of a network, and an event of detecting an input mapped onto the tethering activation event.

6. An operation method performed by a first electronic device, the operation method comprising:
connecting a communication for a tethering service with a second electronic device;
transmitting and receiving data corresponding to the tethering service through the second electronic device; and
transmitting a tethering deactivation request signal to the second electronic device in response to a tethering deactivation event occurring,
wherein the tethering deactivation event is generated based on an event of detecting an input on a tethering termination button mapped onto the tethering deactivation event;
wherein the method further comprises:
receiving tethering state information from the second electronic device, and displaying the tethering state information and the tethering termination button on the display, and
wherein the tethering state information comprises an amount of used data corresponding to the tethering service.

7. The operation method of claim 6, further comprising:
transmitting the tethering deactivation request signal to the second electronic device through the communication for the tethering service or a communication connection separate from the communication for the tethering service.

8. The operation method of claim 7, wherein the communication interface for the tethering service is further configured to provide a wireless LAN method,
wherein the separate communication connection is further configured to provide at least one communication method of Bluetooth and BLE.

9. The operation method of claim 6, further comprising:
transmitting a tethering activation request signal to the second electronic device through a communication connection separate from the communication for the tethering service in response to a tethering activation event occurring; and
transmitting and receiving data corresponding to an Internet service through the communication connection for the tethering service with the second electronic device.

10. The operation method of claim 9, further comprising:
generating the tethering activation event based on at least one of an event of unlocking the first electronic device, an event of driving an application program requiring use of a network, and an event of detecting an input mapped onto the tethering activation event.

## Patentansprüche

1. Erste elektronische Vorrichtung, welche Folgendes umfasst:
eine Kommunikationsschnittstelle;
ein Display; und
einen Prozessor, der konfiguriert ist, um einen Tethering-Dienst mit einer zweiten elektronischen Vorrichtung zu steuern, wobei der Prozessor konfiguriert ist zum:
Steuern der Kommunikationsschnittstelle, um eine Kommunikation für einen Tethering-Dienst mit der zweiten elektronischen Vorrichtung zu verbinden;
Steuern der Kommunikationsschnittstelle, um Daten, die dem Tethering-Dienst entsprechen, an die und von der zweiten elektronischen Vorrichtung zu übertragen und zu empfangen; und
Steuern der Kommunikationsschnittstelle, um ein Tethering-Deaktivierungsanforderungssignal als Reaktion auf das Auftreten eines Tethering-Deaktivierungsereignisses an die zweite elektronische Vorrichtung zu übertragen,
wobei der Prozessor ferner konfiguriert ist, um das Tethering-Deaktivierungsereignis basierend auf einem Ereignis des Erkennens einer Eingabe auf einer Tethering-Beendigungstaste zu erzeugen, die dem Tethering-Deaktivierungsereignis zugeordnet ist;
wobei der Prozessor ferner konfiguriert ist, um die Kommunikationsschnittstelle zu steuern, um Tethering-Zustandsinformationen von der zweiten elektronischen Vorrichtung über die Kommunikationsschnittstelle zu empfangen und das Display zu steuern, um die Tethering-Zustandsinformationen und die Tethering-Beendigungstaste auf dem Display anzuzeigen, und
wobei die Tethering-Zustandsinformationen eine Menge verwendeter Daten umfassen, die dem Tethering-Dienst entsprechen.

2. Erste elektronische Vorrichtung nach Anspruch 1, wobei die Kommunikationsschnittstelle konfiguriert ist, um das Tethering-Deaktivierungsanforderungssignal über die Kommunikation für den Tethering-Dienst oder eine von der Kommunikation für den Tethering-Dienst getrennte Kommunikationsverbindung an die zweite elektronische Vorrichtung zu übertragen.

3. Erste elektronische Vorrichtung nach Anspruch 2, wobei die Kommunikationsschnittstelle für den Tethering-Dienst ferner konfiguriert ist, um ein drahtloses LAN-Verfahren bereitzustellen,
wobei die getrennte Kommunikationsverbindung ferner konfiguriert ist, um ein Bluetooth- und/oder BLE-Kommunikationsverfahren bereitzustellen.

4. Erste elektronische Vorrichtung nach Anspruch 1, wobei der Prozessor konfiguriert ist zum:
Steuern der Kommunikationsschnittstelle, um ein Tethering-Aktivierungsanforderungssignal über eine von der Kommunikation für den Tethering-Dienst getrennte Kommunikationsverbindung als Reaktion auf das Auftreten eines Tethering-Aktivierungsereignisses an die zweite elektronische Vorrichtung zu übertragen; und
Steuern der Kommunikationsschnittstelle, um Daten, die einem Internetdienst entsprechen, über die Kommunikationsverbindung für den Tethering-Dienst mit der zweiten elektronischen Vorrichtung zu übertragen und zu empfangen.

5. Erste elektronische Vorrichtung nach Anspruch 4, wobei der Prozessor ferner konfiguriert ist, um das Tethering-Aktivierungsereignis basierend auf einem Ereignis des Entriegelns der ersten elektronischen Vorrichtung, einem Ereignis des Ansteuerns eines Anwendungsprogramms, das die Verwendung eines Netzes erfordert, und/oder einem Ereignis des Erkennens einer Eingabe zu erzeugen, die dem Tethering-Aktivierungsereignis zugeordnet ist.

6. Betriebsverfahren, welches von einer ersten elektronischen Vorrichtung ausgeführt wird, wobei das Betriebsverfahren Folgendes umfasst:
Verbinden einer Kommunikation für einen Tethering-Dienst mit einer zweiten elektronischen Vorrichtung;
Übertragen und Empfangen von Daten, die dem Tethering-Dienst entsprechen, über die zweite elektronische Vorrichtung; und
Übertragen eines Tethering-Deaktivierungsanforderungssignals an die zweite elektronische Vorrichtung als Reaktion auf das Auftreten eines Tethering-Deaktivierungsereignisses,
wobei das Tethering-Deaktivierungsereignis basierend auf einem Ereignis des Erkennens einer Eingabe auf einer Tethering-Beendigungstaste erzeugt wird, die dem Tethering-Deaktivierungsereignis zugeordnet ist;
wobei das Verfahren ferner Folgendes umfasst:
Empfangen von Tethering-Zustandsinformationen von der zweiten elektronischen Vorrichtung und Anzeigen der Tethering-Zustandsinformationen und der Tethering-Beendigungstaste auf dem Display, und
wobei die Tethering-Zustandsinformationen eine Menge verwendeter Daten umfassen, die dem Tethering-Dienst entsprechen.

7. Betriebsverfahren nach Anspruch 6, welches ferner Folgendes umfasst:
Übertragen des Tethering-Deaktivierungsanforderungssignals über die Kommunikation für den Tethering-Dienst oder eine von der Kommunikation für den Tethering-Dienst getrennte Kommunikationsverbindung an die zweite elektronische Vorrichtung.

8. Betriebsverfahren nach Anspruch 7, wobei die Kommunikationsschnittstelle für den Tethering-Dienst ferner konfiguriert ist, um ein drahtloses LAN-Verfahren bereitzustellen,
wobei die getrennte Kommunikationsverbindung ferner konfiguriert ist, um ein Bluetooth- und/oder BLE-Kommunikationsverfahren bereitzustellen.

9. Betriebsverfahren nach Anspruch 6, welches ferner Folgendes umfasst:
Übertragen eines Tethering-Aktivierungsanforderungssignals über eine von der Kommunikation für den Tethering-Dienst getrennte Kommunikationsverbindung als Reaktion auf das Auftreten eines Tethering-Aktivierungsereignisses an die zweite elektronische Vorrichtung; und
Übertragen und Empfangen von Daten, die einem Internetdienst entsprechen, über die Kommunikationsverbindung für den Tethering-Dienst mit der zweiten elektronischen Vorrichtung.

10. Betriebsverfahren nach Anspruch 9, welches ferner Folgendes umfasst:
Erzeugen des Tethering-Aktivierungsereignisses basierend auf einem Ereignis des Entriegelns der ersten elektronischen Vorrichtung, einem Ereignis des Ansteuerns eines Anwendungsprogramms, das die Verwendung eines Netzes erfordert, und/oder einem Ereignis des Erkennens einer Eingabe, die dem Tethering-Aktivierungsereignis zugeordnet ist.

## Revendications

1. Premier dispositif électronique comprenant :
une interface de communication ;
une unité d'affichage ; et
un processeur configuré pour commander un service de fonction modem avec un deuxième dispositif électronique, le processeur étant configuré pour :
commander l'interface de communication pour se connecter à une communication pour un service de fonction modem avec le deuxième dispositif électronique ;
commander l'interface de communication pour transmettre et recevoir des données correspondant au service de fonction modem vers et depuis le deuxième dispositif électronique ; et
commander l'interface de communication pour transmettre un signal de demande de désactivation de fonction modem au deuxième dispositif électronique en réponse à un événement de désactivation de fonction modem se produisant,
où le processeur est configuré en outre pour générer l'événement de désactivation de fonction modem sur la base d'un événement de détection d'une entrée sur un bouton de fin de fonction modem mappé à l'événement de désactivation de fonction modem ;
où le processeur est configuré en outre pour commander l'interface de communication pour recevoir des informations d'état de fonction modem en provenance du deuxième dispositif électronique à travers l'interface de communication, et commander l'unité d'affichage pour afficher les informations d'état de fonction modem et le bouton de fin de fonction modem sur l'unité d'affichage, et
où les informations d'état de fonction modem comprennent une quantité de données utilisées correspondant au service de fonction modem.

2. Premier dispositif électronique selon la revendication 1, où l'interface de communication est configurée pour transmettre le signal de demande de désactivation de fonction modem au deuxième dispositif électronique à travers la communication pour le service de fonction modem ou une connexion de communication distincte de la communication pour le service de fonction modem.

3. Premier dispositif électronique selon la revendication 2, où l'interface de communication pour le service de fonction modem est configurée en outre pour fournir un procédé de LAN sans fil,
où la connexion de communication distincte est configurée en outre pour fournir au moins un procédé de communication de Bluetooth et BLE.

4. Premier dispositif électronique selon la revendication 1, où le processeur est configuré pour :
commander l'interface de communication pour transmettre un signal de demande d'activation de fonction modem au deuxième dispositif électronique à travers une connexion de communication distincte de la communication pour le service de fonction modem en réponse à un événement d'activation de fonction modem se produisant ; et
commander l'interface de communication pour transmettre et recevoir des données correspondant à un service Internet à travers la connexion de communication pour le service de fonction modem avec le deuxième dispositif électronique.

5. Premier dispositif électronique selon la revendication 4, où le processeur est configuré en outre pour générer l'événement d'activation de fonction modem sur la base d'au moins l'un parmi un événement de déverrouillage du premier dispositif électronique, un événement de pilotage d'un programme d'application nécessitant l'utilisation d'un réseau, et un événement de détection d'une entrée mappé à l'événement d'activation de fonction modem.

6. Procédé de fonctionnement mis en oeuvre par un premier dispositif électronique, le procédé de fonctionnement comprenant :
connecter une communication pour un service de fonction modem avec un deuxième dispositif électronique ;
transmettre et recevoir des données correspondant au service de fonction modem à travers le deuxième dispositif électronique ; et
transmettre un signal de demande de désactivation de fonction modem au deuxième dispositif électronique en réponse à un événement de désactivation de fonction modem se produisant,
où l'événement de désactivation de fonction modem est généré sur la base d'un événement de détection d'une entrée sur un bouton de fin de fonction modem mappé à l'événement de désactivation de fonction modem ;
où le procédé comprend en outre :
recevoir des informations d'état de fonction modem du deuxième dispositif électronique, et afficher les informations d'état de fonction modem et le bouton de fin de fonction modem sur l'unité d'affichage, et
où les informations d'état de fonction modem comprennent une quantité de données utilisées correspondant au service de fonction modem.

7. Procédé de fonctionnement selon la revendication 6, comprenant en outre :
transmettre le signal de demande de désactivation de fonction modem au deuxième dispositif électronique à travers la communication pour le service de fonction modem ou une connexion de communication distincte de la communication pour le service de fonction modem.

8. Procédé de fonctionnement selon la revendication 7, où l'interface de communication pour le service de fonction modem est configurée en outre pour fournir un procédé de LAN sans fil,
où la connexion de communication distincte est configurée en outre pour fournir au moins un procédé de communication de Bluetooth et BLE.

9. Procédé de fonctionnement selon la revendication 6, comprenant en outre :
transmettre un signal de demande d'activation de fonction modem au deuxième dispositif électronique à travers une connexion de communication distincte de la communication pour le service de fonction modem en réponse à un événement d'activation de fonction modem se produisant ; et
transmettre et recevoir des données correspondant à un service Internet à travers la connexion de communication pour le service de fonction modem avec le deuxième dispositif électronique.

10. Procédé de fonctionnement selon la revendication 9, comprenant en outre :
générer l'événement d'activation de fonction modem sur la base d'au moins l'un parmi un événement de déverrouillage du premier dispositif électronique, un événement de pilotage d'un programme d'application nécessitant l'utilisation d'un réseau, et un événement de détection d'une entrée mappé à l'événement d'activation de fonction modem.
